# EUROPÄISCHE PATENTSCHRIFT

(11) **EP 3 418 078 B1**
(45) Veröffentlichungstag und Bekanntmachung des Hinweises auf die Patenterteilung: **27.05.2020**
(21) Anmeldenummer: 18163539.2
(22) Anmeldetag: 23.03.2018
(51) Int. Cl.: B60C 13/00, B29D 29/00, B29D 30/72, F16F 9/04

(54) **VERFAHREN ZUR HERSTELLUNG EINES ELASTOMERPRODUKTS AUFWEISEND EINE MARKIERUNG**
METHOD OF PRODUCING AN ELASTOMER PRODUCT WITH A MARKING
PROCÉDÉ DE FABRICATION DE PRODUIT ÉLASTOMÈRE COMPRENANT UN MARQUAGE

(30) Priorität: 21.06.2017 DE 102017210403
(43) Veröffentlichungstag der Anmeldung: 26.12.2018
(73) Patentinhaber: Continental Reifen Deutschland GmbH, 30165 Hannover (DE)
(72) Erfinder: Wenckel, Mathias, 30539 Hannover (DE)
(74) Vertreter: Finger, Karsten

(56) Entgegenhaltungen:
- EP-A1- 2 020 311
- EP-A1- 2 808 182
- EP-A1- 2 826 643
- WO-A1-2016/185043
- DE-A1-102007 028 933
- DE-T5-112013 001 061
- JP-A- 2002 211 214
- JP-A- 2007 261 304
- JP-A- 2014 121 899
- US-A1- 2004 003 881
- US-A1- 2006 161 381

## Beschreibung

Die Erfindung betrifft ein Verfahren zur Herstellung eines Elastomerproduktes, insbesondere einen Fahrzeugluftreifens, aufweisend eine Festigkeitsträgerlage mit Festigkeitsträgern, wobei an einer ersten Seite der Festigkeitsträgerlage anschließend an die Festigkeitsträger eine Schicht aufweisend elastomeres Material angeordnet ist, wobei die Schicht eine von der Festigkeitsträgerlage abgewandte Schichtoberfläche aufweist, welche die Oberfläche des Elastomerprodukts mitbildet.

Es sind Fahrzeugluftreifen mit unterschiedlichsten Markierungen auf der Reifenseitenwand bekannt. Diese können sich farblich und/oder durch Erhöhungen und/oder Vertiefungen von der umgebenden Seitenwand abheben. Wichtige Aspekte sind hierbei der Helligkeitsunterschied der Markierung, welcher z.B. durch Erhebungen und Vertiefungen der Oberfläche erzeugt wird, verbunden mit der Detektierbarkeit der Markierung mittels eines Messgerätes. Üblich ist die Detektion mittels eines optischen Systems. Ein anderer Aspekt ist der Schutz der Markierung vor Abnutzung und Beschädigung.

Aus der EP 1 625 952 A1 ist eine Reifenseitenwand mit einem erhabenen Bereich bekannt. Auf dem erhabenen Bereich ist eine bezüglich des erhabenen Bereichs erhabene Markierung ausgebildet. Die erhabene Markierung ist aus einer Vielzahl an übereinanderliegenden Lagen aus einer vulkanisierbaren Elastomermischung gebildet. Die einzelnen Lagen sind dabei entsprechend der Markierung vorgeformt und werden eine nach der anderen auf die Seitenwand aufgebracht. Die so an der Seitenwand gebildete Markierung wird dann vulkanisiert. Das Aufbringen der einzelnen Lagen, insbesondere die präzise Positionierung der Lagen, sowie das Vulkanisieren der Markierung ist allerdings aufwändig. Eine solche Markierung ist nicht für kleinteilige Strukturen geeignet. Auch kann bei starker Beanspruchung oder durch den Alterungsprozess ein zumindest teilweises Ablösen der einzelnen Lagen erfolgen.

Weiter ist es aus der EP 2 977 934 A1 bekannt, eine Markierung mittels Laser-Technologie auf einer vulkanisierten Reifenseitenwand anzubringen. Hierbei wird mittels Energieeintrag durch einen Laserstrahl lokal Material abgetragen. Durch die lokal reduzierte Dicke der Reifenseitenwand, insbesondere durch eine geringe Materialstärke zwischen den Festigkeitsträgern der Karkasse des Reifens und den Vertiefungen der Markierung, kann es aber zur Bildung von Rissen kommen und die Haltbarkeit des Reifens kann beeinträchtigt sein. Eine solche Markierung eignet sich somit nur für Elastomerprodukte mit einer ausreichendgroßen Schichtdicke zwischen den Festigkeitsträgern und der Produktoberfläche. Eine solche Markierung aufweisend eine Vertiefung steht somit im Zielkonflikt mit einer geringen Seitenwanddicke.

Gleichzeitig geht die Entwicklung aber dahin, die Seitenwanddicke von Reifen, insbesondere zur Verbesserung des Rollwiderstands, zu reduzieren. Auch für andere Elastomerprodukte, wie z.B. für Transportbänder oder für Fördergurte, geht die Entwicklung hin zu geringen Dicken.

Die EP 2 020 311 A1, US 2004/0003881 A1, JP 2002 211214 A, EP 2 808 102 A1, WO 2016/185043 A1, JP 2014 121899 A offenbaren jeweils ein Elastomerprodukt, insbesondere eine Reifenseitenwand, mit einem erhabenen Bereich und mit einer Vertiefung, die relativ zum Normalniveau der Seitenwand abgesenkt ist.

Die JP 2007 261304 A offenbart eine Reifenseitenwand aufweisend Erhebungen.

Die DE 10 2007 028 933 A1 und US 2006/0161381 A1 offenbaren jeweils ein Verfahren zur Bestimmung der Position zum Anbringen eines Kennzeichens an einer Seitenwand eines Fahrzeugluftreifens.

Aufgabe der vorliegenden Erfindung ist es, ein Verfahren zur Herstellung eines Elastomerprodukts mit einer Markierung zur Verfügung zu stellen, wobei das Produkt bei einer geringen Dicke eine verbesserte Haltbarkeit aufweist.

Die Aufgabe wird gelöst, indem die Schichtoberfläche einen um eine Höhe B erhabenen Bereich aufweist, wobei innerhalb des erhabenen Bereichs ein Markierungsbereich mit zumindest einer Vertiefung einer Tiefe T angeordnet ist, wobei die Tiefe T die maximale Tiefe der Vertiefung bezogen auf das an die Vertiefung angrenzende Oberflächenniveau des erhabenen Bereichs ist, und indem die Tiefe T der zumindest einen Vertiefung größer, bevorzugt um 0,2 mm bis 0,6 mm größer, besonders bevorzugt um 0,2 mm bis 0,4 mm größer, ist als die Höhe B des erhabenen Bereichs.

Das die Aufgabe lösende Verfahren beinhaltet zumindest die folgenden Schritte:
a) Herstellen eines vulkanisierten Vorprodukts aufweisend die Festigkeitsträgerlage und die Schicht mit dem um die Höhe B erhabenen Bereich, wobei der erhabene Bereich mit einer Orientierungsmarke versehen wird und
b) Materialabtrag, bevorzugt Materialabtrag mittels Lasergravur durch Bestrahlung der Schichtoberfläche mit Laserlicht, im Bereich des Markierungsbereichs innerhalb des erhabenen Bereichs zur Erzeugung der zumindest einen Vertiefung der Tiefe T, wobei die Tiefe T größer, bevorzugt um 0,2 mm bis 0,6 mm größer, besonders bevorzugt um 0,2 mm bis 0,4 mm größer, ist als die Höhe B des erhabenen Bereichs.

Bedeutend ist, dass die Schicht lokal im Bereich des erhabenen Bereichs eine um die Höhe B größere Schichtdicke aufweist und dass der Markierungsbereich mit der zumindest einen Vertiefung der Tiefe T innerhalb dieses um die Höhe B erhabenen Bereichs angeordnet ist. Die zumindest eine Vertiefung der Tiefe T ist dabei Teil einer Markierung, welche innerhalb des Markierungsbereichs angeordnet ist. Die Tiefe T der zumindest einen Vertiefung ist dabei größer als die Höhe B des erhabenen Bereichs. Somit kann auch bei einer geringen Schichtdicke sowohl eine für einen guten Helligkeitsunterschied und/oder eine gute Detektierbarkeit der Markierung ausreichend große Tiefe T als auch eine für die Haltbarkeit des Elastomerprodukts lokal ausreichend große Materialstärke M zwischen den Festigkeitsträgern und dem Grund der zumindest einen Vertiefung sichergestellt werden. Es hat sich hierbei als vorteilhaft herausgestellt, wenn die Tiefe T um 0,2 mm bis 0,6 mm, besonders bevorzugt um 0,2 mm bis 0,4 mm, größer ist als die Höhe B des erhabenen Bereichs. Eine Vergrößerung der Dicke über die gesamte Erstreckung der Schicht zur Erreichung einer ausreichenden Materialstärke M zwischen den Festigkeitsträgern und der Vertiefung kann somit vermieden werden.

Es hat sich gezeigt, dass gerade bei Vertiefungen, die mittels Materialabtrag des bereits vulkanisierten Materials erzeugt sind, die Einhaltung einer ausreichenden Materialstärke M zwischen Festigkeitsträgern und Grund der Vertiefung für die Haltbarkeit eine entscheidende Rolle spielt. Durch den um die Höhe B erhabenen Bereich kann auch im Fall einer an sich geringen Dicke D der Schicht eine ausreichende Materialstärke M erreicht werden.

Für eine präzise und/oder automatisierte Positionierung und Ausrichtung der Markierung wird in Schritt a) der erhabene Bereich mit einer Orientierungsmarke versehen.

Es ist ein Elastomerprodukt zur Verfügung gestellt, das auch bei geringer Dicke des Elastomerprodukts, insbesondere bei geringer Dicke D der Schicht, eine verbesserte Haltbarkeit aufweist.

Die Höhe B des erhabenen Bereichs, die Tiefe T der Vertiefung, die Materialstärke M zwischen dem Grund einer Vertiefung und den Festigkeitsträgern der Festigkeitsträgerlage sowie die Dicke D der Schicht sind gemessen senkrecht zu einer äußeren Einhüllenden des Elastomerprodukts. Die Einhüllende kann eine Hüllfläche sein, die zumindest im Bereich der Schichtoberfläche an der Oberfläche des Elastomerprodukts anliegt, wobei Erhebungen und/oder Vertiefungen wie z.B. durch den erhabenen Bereich, durch eine Markierung, durch eine Beschriftung, durch Dekorationen und/oder durch Vorkehrungen zur Beeinflussung des Luftwiderstandes und/oder durch Vorkehrungen zum Schutz des Elastomerprodukts, wie z.B. Schutzbänder oder Schutzrippen, und/oder ähnliches nicht berücksichtigt sind.

Die Tiefe T einer Vertiefung ist die maximale Tiefe dieser Vertiefung bezogen auf das an die Vertiefung angrenzende Oberflächenniveau des erhabenen Bereichs. Die Materialstärke M zwischen dem Grund einer Vertiefung und den Festigkeitsträgern der Festigkeitsträgerlage ist die minimale Materialstärke gemessen zwischen einer von der ersten Seite an den Festigkeitsträgern anliegenden weiteren Hüllfläche und dem Grund der Vertiefung.

Bei dem Elastomerprodukt handelt es sich bevorzugt um einen Fahrzeugluftreifen, besonders bevorzugt um einen Radialreifen, mit einer Markierung auf der Reifenseitenwand. Die Festigkeitsträgerlage kann eine Karkasslage, insbesondere eine im Bereich der Markierung axial äußerste Karkasslage sein. Die Schicht kann durch eine axial außerhalb der Festigkeitsträger der Karkasslage angeordnete Reifenseitenwand gebildet sein.

Für einen guten Helligkeitsunterschied und/oder eine gute Detektierbarkeit der Markierung ist es zweckmäßig, wenn die Markierung zwei oder mehr Vertiefungen der zumindest einen Vertiefung der Tiefe T aufweist. Zur Differenzierung der Vertiefungen der Markierungen kann die Markierung aber auch zweite Vertiefungen aufweisen, die eine geringere Tiefe aufweisen als die Höhe B des erhabenen Bereichs.

In einer vorteilhaften Ausführungsform beträgt die Materialstärke M zwischen den Festigkeitsträgern und einem Grund der zumindest einen Vertiefung mindestens 1,0 mm, bevorzugt von 1,2 mm bis 3,5 mm, besonders bevorzugt von 2,1 mm bis 2,5 mm. In Bezug auf einen Fahrzeugluftreifen ist hierdurch eine hervorragende Haltbarkeit des Reifens erreicht.

In einer weiteren vorteilhaften Ausführungsform beträgt die Höhe B des erhabenen Bereichs 0,05 mm bis 1,2 mm, bevorzugt 0,1 mm bis 1,0 mm, besonders bevorzugt 0,3 mm bis 0,5 mm. Bei festgelegter Tiefe T der Vertiefung erhöht die Höhe B des erhabenen Bereichs die Materialstärke M. Bei einer geringeren Höhe B als 0,05 mm ist der Effekt der Vergrößerung der Materialstärke M sehr gering. Bei einer größeren Höhe B des erhabenen Bereichs als 0,5 mm hat es sich gezeigt, dass durch die Menge an zusätzlichem Material der Verlauf der Festigkeitsträger durch den erhabenen Bereich beeinflusst sein kann.

Die Seitenwandoberfläche weist im Bereich der zumindest einen Vertiefung in der Regel andere Licht-Reflexionseigenschaften auf als in Bereichen ohne eine Vertiefung oder mit einer oder mehreren anders ausgestalteten Vertiefungen. Hierdurch können sich die Bereiche in ihrem Licht-Reflexionsgrad unterscheiden. Ein daraus bei Lichteinfall aus einer Lichtquelle wie dem Sonnenlicht, einer Raumbeleuchtung, einer Hintergrundbeleuchtung oder einer im Zuge der Betrachtung oder Detektion auf den Markierungsbereich gerichteten Lichtquelle resultierender Helligkeitsunterschied kann vom menschlichen Auge wahrgenommen werden und/oder mittels eines optischen Systems erfasst und vermessen werden.

Ein vorteilhafter Helligkeitsunterschied und/oder eine gute Detektierbarkeit der Markierung ergibt sich, wenn die zumindest eine Vertiefung eine Tiefe T von 0,2 mm bis 1,0 mm, bevorzugt von 0,4 mm bis 0,7 mm, besonders bevorzugt von in etwa 0,6 mm, aufweist. Solche Tiefen können auf einfache Weise mittels Materialabtrag durch Lasergravur erreicht werden.

Die beschriebenen Maßnahmen sind besonders vorteilhaft, wenn die Schicht eine Dicke D von maximal 4,0 mm, bevorzugt von 2,1 mm bis 3,5 mm, besonders bevorzugt von 2,5 mm bis 3,0 mm, aufweist. Handelt es sich bei dem Elastomerprodukt um einen Fahrzeugluftreifen, so kann bereits bei so geringer Dicke D durch den erhabenen Bereich eine ausreichende Haltbarkeit erreicht werden.

Als besonders vorteilhaft, insbesondere für einen Fahrzeugluftreifen, hat es sich herausgestellt, wenn bei einer Dicke D von 2,5 mm bis 3,0 mm die Tiefe T 0,4 mm bis 0,7 mm, die Höhe B 0,3 mm bis 0,5 mm und die Differenz T-B 0,2 mm bis 0,4 mm beträgt.

Bei der Markierung innerhalb des Markierungsbereichs kann es sich um eine Abbildungen, ein Schriftzeichen, eine Schrift, einen Firmennamen, ein Firmenlogo, eine Kennzeichnungen oder zumindest um einen Teil davon handeln. Es kann sich dabei auch um einen digitalen Code handeln. Bevorzugt handelt es sich um einen eindimensionalen Code, insbesondere einen Strichcode, oder um einen zweidimensionalen Code, insbesondere einen quick-response- (QR-) Code. Bei den zweidimensionalen Codes sind insbesondere gestapelte Codes wie der Codablock, Code 49 und PDF417, sowie Matrix Codes wie QR-Codes, der DataMatrix Code, MaxiCode und Aztec-Code, sowie Punktcodes zu nennen. QR-Codes umfassen auch Weiterentwicklungen wie den Design-QR-Code, den Micro-QR-Code, den Secure-QR-Code und den iQR-Code.

Ein digitaler Code kann durch eine Vielzahl an ersten Flächenbereichen und eine Vielzahl an zweiten Flächenbereichen auf der Produktoberfläche dargestellt werden. Die ersten Flächenbereiche unterscheiden sich von den zweiten Flächenbereichen in ihrem Oberflächenprofil derart, dass sie unterschiedliche Licht-Reflexionseigenschaften aufweisen, wodurch sie durch ein optisches System vermessen werden können. Beispielsweise können die ersten Flächenbereiche durch die unbearbeitete Produktoberfläche gebildet sein. Jeder der zweiten Flächenbereiche kann eine Vertiefung aufweisen. Das Oberflächenprofil der zweiten Flächenbereiche kann durch auch eine Textur oder eine Struktur aufweisend zumindest eine Vertiefung gebildet sein. Das Oberflächenprofil kann aus mehreren regelmäßig oder unregelmäßig angeordneten Vertiefungen gebildet sein. Auch zur Darstellung von anderen Markierungen, insbesondere von den oben genannten Markierungen, ist ein solches Oberflächenprofil aufweisend die zumindest eine Vertiefung der Tiefe T, vorteilhaft.

In einer besonders geeigneten Ausführungsform nimmt der erhabene Bereich eine Fläche von maximal 1600 mm², bevorzugt von 100 mm² bis 800 mm², besonders bevorzugt von 200 mm² bis 400 mm², auf der Oberfläche des Elastomerprodukts ein. Auf einem solchen erhabenen Bereich lässt sich hervorragend eine Markierung wie eine Abbildung, eine Schrift oder ein digitaler Code anbringen. Nimmt der erhabene Bereich eine Fläche größer als 1600 m m² ein, so kann die Lage der Festigkeitsträger von dem zusätzlichen Material beeinflusst sein.

Eine Vergrößerung der Materialstärke M durch den erhabenen Bereich der Höhe B bei einer Vertiefung der Tiefe T ist in Bezug auf die Haltbarkeit, insbesondere die Haltbarkeit gegenüber Rissbildung, besonders vorteilhaft in dem Fall, dass die zumindest eine Vertiefung durch Materialabtrag, bevorzugt durch Materialabtrag mittels Lasergravur, von Material des vulkanisierten erhabenen Bereichs erzeugt ist. Die zumindest eine Vertiefung kann durch einen Materialabtrag besonders einfach erzeugt werden. Durch die nachträgliche Bearbeitung des bereits vulkanisierten Elastomerprodukts ist die Materialstärke M zwischen den Festigkeitsträgern und dem Grund der zumindest einen Vertiefung von besonderer Bedeutung für die Haltbarkeit, insbesondere der Haltbarkeit gegenüber Rissbildung, des Elastomerprodukts.

Um eine möglichst präzise Ausrichtung eines zum Materialabtrag geeigneten Mittels zu ermöglichen, weist der erhabene Bereich eine Orientierungsmarke auf, welche derart ausgebildet ist, dass sie mittels eins optischen Systems optisch vermessbar ist. Das optische System umfasst zumindest einen optischen Detektor. Durch optische Vermessung der Orientierungsmarke kann somit über eine Positioniervorrichtung eine räumliche Position und Ausrichtung einer Lenkvorrichtung zur Orientierungsmarke bestimmt werden. Die Lenkvorrichtung ist eine Vorrichtung zur Lenkung des zum Materialabtrag geeigneten Mittels. Weiter wird die Lenkung der Lenkvorrichtung und/oder eine Positionsänderung des Elastomerprodukts in Abhängigkeit von dieser Bestimmung vorgenommen.

Hierdurch ist eine automatisierte und präzise Ausrichtung des zum Materialabtrag geeigneten Mittels zur Erzeugung der zumindest einen Vertiefung ermöglicht. Bei dem zum Materialabtrag geeigneten Mittel kann es sich um Laserlicht handeln. Bei der Orientierungsmarke kann es sich um eine oder mehrere Erhebungen und/oder Vertiefungen des erhabenen Bereichs handeln. Es kann sich um zwei zueinander schiefe Begrenzungskanten des erhabenen Bereichs handeln. Es kann sich um zumindest drei Orientierungspunkte handeln, die die Ecken eines Dreiecks aufspannen. Die Orientierungspunkte können Ausstülpungen oder Einstülpungen des erhabenen Bereichs sein. Die Orientierungsmarke kann zusammen mit dem erhabenen Bereich formgebend vulkanisiert sein.

Bei dem Elastomerprodukt handelt es sich bevorzugt um einen Fahrzeugluftreifen aufweisend eine Karkasslage als Festigkeitsträgerlage. Der erhabene Bereich kann dabei axial außen an der Reifenseitenwand angeordnet sein. Es kann sich um einen Reifen für einen Personenkraftwagen, einen Van, ein SUV, einen Light-Truck, ein Nutzfahrzeug, ein Kraftrad oder einen Bus handeln. Es kann sich aber auch um ein anderes Elastomerprodukt aufweisend eine Festigkeitsträgerlage wie um ein Transportband oder um ein Förderband oder um eine Luftfeder handeln.

Der erhabene Bereich wird besonders einfach erzeugt, wenn der erhabene Bereich bei Schritt a) formgebend zusammen mit der Schicht vulkanisiert wird. In diesem Fall kann eine Vulkanisationsform formgebende Mittel, insbesondere eine Ausnehmung, zur Schaffung des erhabenen Bereichs aufweisen.

Der erhabene Bereich kann aber auch als vulkanisiertes Bauteil nach der Vulkanisation der der Schicht auf die Schicht aufgebracht werden.

Für eine präzise und/oder automatisierte Positionierung und Ausrichtung der Markierung wird in Schritt a) der erhabene Bereich mit der Orientierungsmarke versehen.

Dabei wird zwischen Schritt a) und Schritt b) in einem Schritt c) die Orientierungsmarke mittels des optischen Systems vermessen und mittels einer Positioniervorrichtung eine räumliche Position einer Lenkvorrichtung zur Lenkung eines zum Materialabtrag geeigneten Mittels relativ zur Position und/oder Ausrichtung der Orientierungsmarke bestimmt und eine Positionierung des Elastomerprodukts in Abhängigkeit von dieser Bestimmung vorgenommen. Hierdurch kann der Markierungsbereich an eine zum Materialabtrag geeignete Position gebracht werden. Bei einem Fahrzeugluftreifen kann diese Positionsänderung unter anderem durch eine Rotation des Reifens erreicht werden.

Alternativ wird zwischen Schritt a) und Schritt b) in einem Schritt d) die Orientierungsmarke mittels des optischen Systems vermessen und mittels einer Positioniervorrichtung eine räumliche Position und/oder Ausrichtung einer Lenkvorrichtung zur Lenkung eines zum Materialabtrag geeigneten Mittels relativ zur Position und/oder Ausrichtung der Orientierungsmarke bestimmt und bei Schritt b) die Lenkung der Lenkvorrichtung in Abhängigkeit von dieser Bestimmung vorgenommen. Hierdurch ist eine noch exaktere Positionierung der zumindest einen Vertiefung ermöglicht.

Wird sowohl die Positionierung des Elastomerprodukts als auch die Lenkung der Lenkvorrichtung in Abhängigkeit von einer Bestimmung unter Zuhilfenahme des optischen Systems vorgenommen, so ist es vorteilhaft, wenn Schritt c) vor Schritt d) erfolgt. Die Vermessung der Orientiertungsmarke kann dabei sowohl vor Schritt c) als auch vor Schritt d) oder nur vor Schritt c) erfolgen.

Das zum Materialabtrag geeignete Mittel kann Laserlicht sein. Dieses wird von einem Laser erzeugt.

Weitere Merkmale, Vorteile und Einzelheiten der Erfindung werden nun anhand der schematischen Zeichnungen, die Ausführungsbeispiele darstellen, näher erläutert. Dabei zeigt die
Figur 1 einen Teilquerschnitt durch ein Elastomerprodukt;
Figur 2 eine Seitenansicht eines Fahrzeugluftreifens,
Figur 3 eine Draufsicht auf einen erhabenen Bereich;
Figur 4 eine Draufsicht auf einen erhabenen Bereich;
Figur 5 einen Verfahrensschritt.

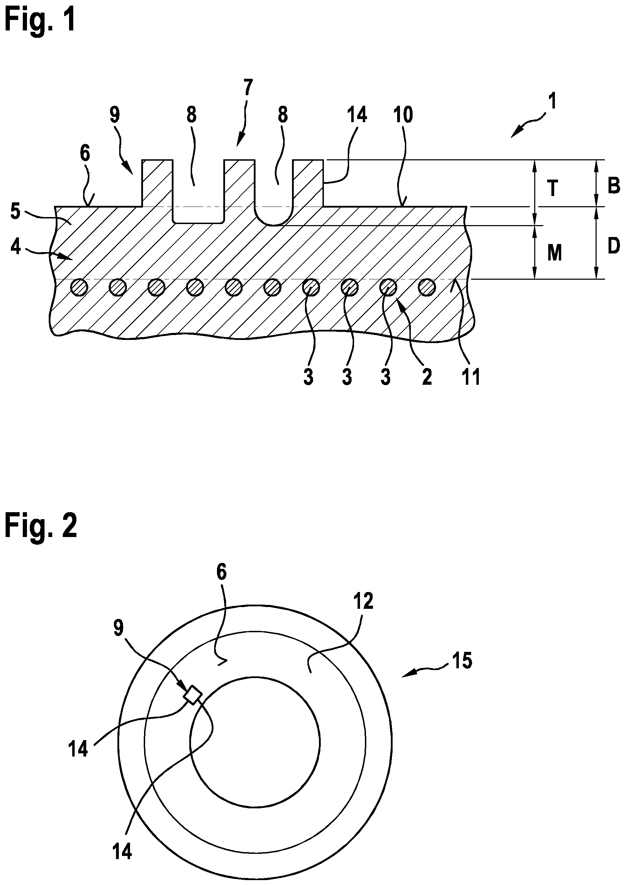

Die Figur 1 zeigt einen Teilquerschnitt durch ein Elastomerprodukt 1, welches eine Festigkeitsträgerlage 2 mit Festigkeitsträgern 3 aufweist. Anschließend an eine erste Seite 4 der Festigkeitsträgerlage 2 ist eine Schicht 5 aufweisend elastomeres Material angeordnet. Die Schicht 5 weist eine von der Festigkeitsträgerlage 2 abgewandte Schichtoberfläche 6 auf, welche die Oberfläche des Elastomerprodukts 1 mitbildet.

Die Schichtoberfläche 6 weist einen Markierungsbereich 7 mit zumindest einer Vertiefung 8 einer Tiefe T sowie einen um eine Höhe B erhabenen Bereich 9 auf. Innerhalb des Markierungsbereichs 7 ist eine Markierung angeordnet, welche die zumindest eine Vertiefung 8 umfasst. Der Markierungsbereich 7 ist dabei innerhalb des erhabenen Bereichs 9 angeordnet. Die Tiefe T der zumindest einen Vertiefung 8 ist größer, bevorzugt um 0,2 mm bis 0,6 mm größer, besonders bevorzugt um 0,2 mm bis 0,4 mm größer, als die Höhe B des erhabenen Bereichs 9.

Die Höhe B des erhabenen Bereichs 9, die Tiefe T der zumindest einen Vertiefung 8, die Materialstärke M zwischen dem Grund einer Vertiefung 8 und den Festigkeitsträgern 3 der Festigkeitsträgerlage 2 sowie die Dicke D der Schicht 5 sind gemessen senkrecht zu einer äußeren Einhüllenden des Elastomerprodukts 1. Die Einhüllende ist hier eine Hüllfläche 10, die zumindest im Bereich der Schichtoberfläche 6 an der Oberfläche des Elastomerprodukts anliegt, wobei Erhebungen und/oder Vertiefungen wie z.B. durch den erhabenen Bereich 9, durch eine Markierung, durch eine Beschriftung, durch Dekorationen und/oder durch Vorkehrungen zur Beeinflussung des Luftwiderstandes und/oder durch Vorkehrungen zum Schutz des Elastomerprodukts, wie z.B. Schutzbänder oder Schutzrippen, und/oder ähnliches nicht berücksichtigt sind.

Die Tiefe T einer Vertiefung 8 ist die maximale Tiefe dieser Vertiefung 8 bezogen auf das an die Vertiefung angrenzende Oberflächenniveau des erhabenen Bereichs 9. Die Materialstärke M zwischen dem Grund einer Vertiefung und den Festigkeitsträgern 3 der Festigkeitsträgerlage 2 ist die minimale Materialstärke gemessen zwischen einer von der ersten Seite an den Festigkeitsträgern anliegenden weiteren Hüllfläche 11 und dem Grund der Vertiefung 8.

Die Materialstärke M zwischen den Festigkeitsträgern 3 und einem Grund der zumindest einen Vertiefung kann mindestens 1,0 mm, bevorzugt von 1,2 mm bis 3,5 mm, besonders bevorzugt von 2,1 mm bis 2,5 mm, betragen.

Die Höhe B des erhabenen Bereichs 9 kann 0,05 mm bis 1,2 mm, bevorzugt 0,1 mm bis 1,0 mm, besonders bevorzugt 0,3 mm bis 0,5 mm, betragen. Die zumindest eine Vertiefung 8 kann eine Tiefe T von 0,2 mm bis 1,0 mm, bevorzugt von 0,4 mm bis 0,7 mm, besonders bevorzugt von in etwa 0,6 mm, aufweisen. Die Schicht 5 kann eine Dicke D von maximal 4,0 mm, bevorzugt von 2,1 mm bis 3,5 mm, besonders bevorzugt von 2,5 mm bis 3,0 mm, aufweisen. Bei einer Dicke D von 2,5 mm bis 3,0 mm kann die Tiefe T 0,4 mm bis 0,7 mm, die Höhe B 0,3 mm bis 0,5 mm und die Differenz T - B 0,2 mm bis 0,4 mm betragen.

Innerhalb des Markierungsbereichs 7 kann eine Markierung angeordnet ist, welche die zumindest eine Vertiefung 8 umfasst, wobei die Markierung ganz oder teilweise eine Abbildungen, ein Schriftzeichen, eine Schrift, einen Firmennamen, ein Firmenlogo, eine Kennzeichnungen oder einen digitalen Code, bevorzugt einen eindimensionalen Code oder einen zweidimensionalen Code, darstellt.

Der erhabene Bereich 9 kann eine Fläche von maximal 1600 mm², bevorzugt von 100 mm² bis 800 mm², besonders bevorzugt von 200 mm² bis 400 mm², auf der Oberfläche des Elastomerprodukts 1 einnehmen.

Die zumindest eine Vertiefung 8 kann durch Materialabtrag, bevorzugt durch Materialabtrag mittels Lasergravur, von Material des vulkanisierten erhabenen Bereichs 9 erzeugt ist.

Der erhabene Bereich 9 weist eine Orientierungsmarke auf, welche derart angeordnet ist, dass sie mittels eines hier nicht dargestellten optischen Systems 13 optisch vermessbar ist. Das optische System 13 umfasst dabei zumindest einen optischen Detektor. Bei der Orientierungsmarke kann es sich um eine oder mehrere Erhebungen und/oder Vertiefungen des erhabenen Bereichs 9 handeln. In der Figur 1 handelt es sich dabei um zwei zueinander schiefe Begrenzungskanten 14 des erhabenen Bereichs 9, wobei nur eine der Kanten 14 gezeigt ist.

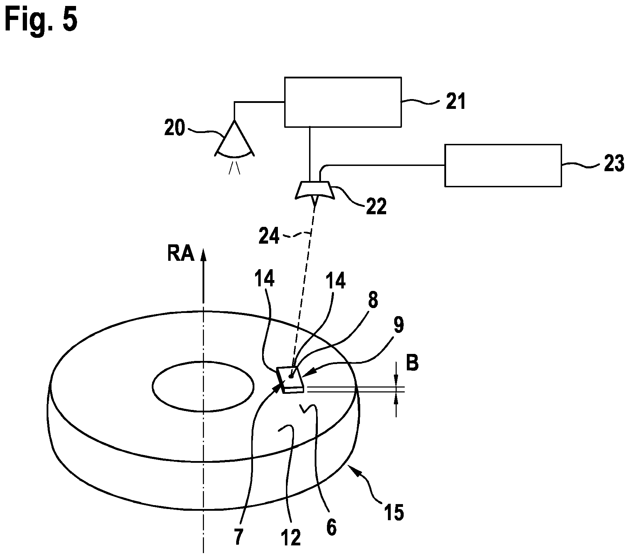

Bei dem gezeigten Elastomerprodukt 1 kann es sich um einen wie in der Figur 5 gezeigten Fahrzeugluftreifen 15 handeln. Es kann sich aber auch um ein Transportband oder um ein Förderband oder um eine Luftfeder handeln.

Die Figur 2 zeigt eine Seitenansicht eines Fahrzeugluftreifens 2 üblicher Bauart aufweisend eine Karkasse mit einer Karkass-Festigkeitsträgerlage mit Karkass-Festigkeitsträgern. Axial außerhalb der Karkass-Festigkeitsträger ist die Reifenseitenwand 12 als die Schicht 5 angeordnet. Die Schichtoberfläche 6 weist einen erhabenen Bereich 9 auf, innerhalb dessen ein Markierungsbereich 7 mit einer Markierung, insbesondere ein QR-Code, angeordnet ist. Die Markierung weist eine Vielzahl an nicht dargestellten Vertiefungen der Tiefe T auf. Weiter weist der erhabene Bereich 9 zwei zueinander schiefe Begrenzungskanten 14 auf, welche Orientierungsmarken darstellen und mittels eines optischen Systems vermessen werden können.

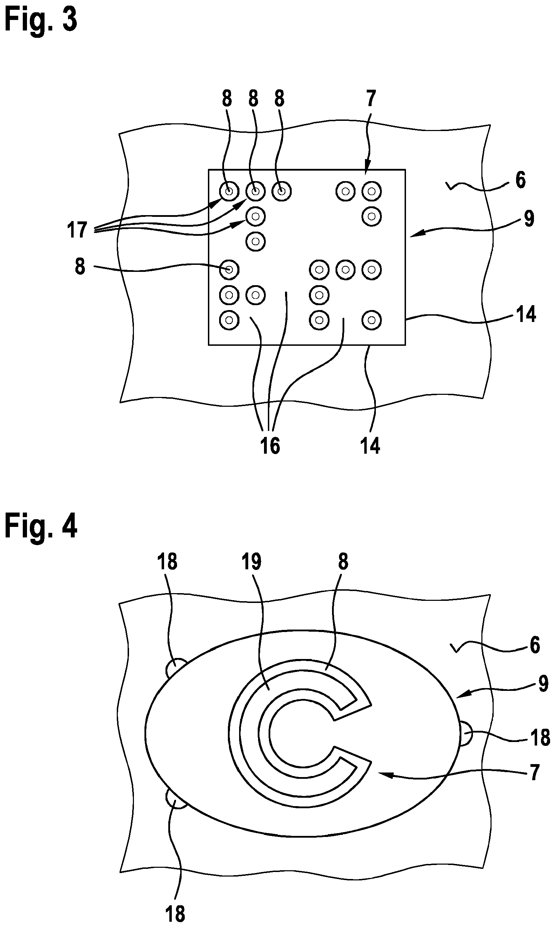

Die Figur 3 zeigt eine Draufsicht auf die Schichtoberfläche 6 mit einem erhabenen Bereich 9. Der erhabene Bereich 9 weist einen Markierungsbereich 7 mit einem digitalen Code als Markierung auf. Der digitale Code ist durch eine Vielzahl an ersten Flächenbereichen 16 und eine Vielzahl an zweiten Flächenbereichen 17 dargestellt. Die ersten Flächenbereiche 16 entsprechen der unbehandelten Produktoberfläche. Die zweiten Flächenbereiche 17 weisen eine Oberflächenprofil auf, welches für jeden zweiten Flächenbereich genau eine Vertiefung der Tiefe T aufweist. Die Vertiefungen 8 weisen eine Tiefe T von 0,4 mm bis 0,7 mm, bevorzugt von in etwa 0,6 mm, auf. Die Vertiefungen 8 sind mittels Lasergravur erzeugt.

Die Figur 4 zeigt eine Draufsicht auf eine weitere Schichtoberfläche 6 aufweisend einen erhabenen Bereich 9 mit einem Markierungsbereich 7. Der Markierungsbereich 7 beinhaltet den Buchstaben "C" als Markierung. Der Buchstabe ist dabei von einer Vertiefung 8 der Tiefe T umrandet. Der erhabene Bereich 9 weist eine Fläche von 100 mm² bis 800 mm² auf. Der erhabene Bereich 9 weist weiter drei Ausstülpungen 18 als Orientierungspunkte der Orientierungsmarke auf, welche die Ecken eines Dreiecks aufspannen. Die Markierung kann auch eine Vielzahl an Vertiefungen 8 aufweisen, welche zusammen eine Textur oder eine Struktur ausbilden. Die Vertiefungen 8 können dabei punktförmig oder linienförmig ausgebildet sein. Beispielsweise kann der Bereich 19 dementsprechend ausgebildet sein.

In der Figur 5 wird das Verfahren zu Herstellung eines solchen Elastomerprodukts am Beispiel eines Fahrzeugluftreifens 15 näher erläutert.

In einem dem dargestellten Prozessschritt vorgelagerten Schritt a) wird der vulkanisierte Fahrzeugluftreifen 15 aufweisend die Karkasslage als Festigkeitsträgerlage und die Seitenwand 12 mit dem um die Höhe B erhabenen Bereich 9 als Schicht als Vorprodukt hergestellt. Der erhabene Bereich 9 kann dabei zusammen mit der Seitenwand 12 und weiteren Bauteilen des Fahrzeugluftreifens 15 formgebend vulkanisiert werden. Der erhabene Bereich 9 kann dabei mit einer Orientierungsmarke versehen bereitgestellt werden. Im dargestellten Beispiel ist die Orientierungsmarke durch zwei Begrenzungskanten 14 gebildet.

In der Figur 5 ist eine Apparatur zu den weiteren Verfahrensschritten dargestellt. Die Apparatur umfasst ein optisches System 20, eine Positioniervorrichtung 21, eine Lenkvorrichtung 22 zur Lenkung eines Laserlichtstrahls und einen Laser 23.

In einem dem Schritt a) nachgelagerten Schritt c) kann die Orientierungsmarke 14 mittels des optischen Systems 20 vermessen werden und mittels einer Positioniervorrichtung 21 eine räumliche Position einer Lenkvorrichtung 22 zur Lenkung eines von einem Laser 23 erzeugten Laserlichts relativ zur Position und/oder Ausrichtung der Orientierungsmarke 14 bestimmt werden. Eine Positionierung des Fahrzeugluftreifens 15 kann somit in Abhängigkeit von dieser Bestimmung vorgenommen werden. Hierdurch kann der Markierungsbereich 7 welcher mit zumindest einer Vertiefung 8 der Tiefe T versehen werden soll an eine zum Materialabtrag geeignete Position gebracht werden. Bei dem Fahrzeugluftreifen 15 kann diese Positionsänderung unter anderem durch eine Rotation des Reifens 15 um seine Rotationsachse RA erreicht werden.

In einem dem Schritt a) nachgelagerten Schritt d) kann die Orientierungsmarke 14 mittels des optischen Systems 20 vermessen werden und mittels einer Positioniervorrichtung eine räumliche Position und/oder Ausrichtung einer Lenkvorrichtung zur Lenkung eines zum Materialabtrag geeigneten Mittels relativ zur Position und/oder Ausrichtung der Orientierungsmarke bestimmt werden.

Wird sowohl die Positionierung des Fahrzeugluftreifens 15 als auch die Lenkung der Lenkvorrichtung 22 in Abhängigkeit von einer Bestimmung unter Zuhilfenahme des optischen Systems 20 vorgenommen, so ist es vorteilhaft, wenn Schritt c) vor Schritt d) erfolgt. Die Vermessung der Orientiertungsmarke 14 kann dabei sowohl vor Schritt c) als auch vor Schritt d) oder nur vor Schritt c) erfolgen.

In einem den bereits beschriebenen Schritten nachgelagertem und in der Figur 5 dargestellten Schritt b) erfolgt der Materialabtrag, bevorzugt der Materialabtrag mittels Lasergravur durch Bestrahlung der Schichtoberfläche 6 mit Laserlicht 24, im Bereich des Markierungsbereichs 7 innerhalb des erhabenen Bereichs 9 zur Erzeugung der zumindest einen Vertiefung 8 der Tiefe T, wobei die Tiefe T größer, bevorzugt um 0,2 mm bis 0,6 mm größer, besonders bevorzugt um 0,2 mm bis 0,4 mm größer, ist als die Höhe B des erhabenen Bereichs 9. Ist zuvor der Schritt d) vorangegangen, so kann die Lenkung der Lenkvorrichtung 22 in Abhängigkeit von der im Schritt d) erfolgten Bestimmung vorgenommen werden. Hierdurch ist eine noch exaktere Positionierung der zumindest einen Vertiefung 8 ermöglicht.

### Bezugszeichenliste

- 1: Elastomerprodukt
- 2: Festigkeitsträgerlage
- 3: Festigkeitsträger
- 4: erste Seite
- 5: Schicht
- 6: Schichtoberfläche
- 7: Markierungsbereich
- 8: Vertiefung
- 9: erhabener Bereich
- 10: Hüllfläche
- 11: weitere Hüllfläche
- 12: Reifenseitenwand
- 13: optisches System
- 14: Begrenzungskante
- 15: Fahrzeugluftreifen
- 16: erster Flächenbereich
- 17: zweiter Flächenbereich
- 18: Ausstülpung
- 19: Bereich
- 20: optisches System
- 21: Positioniervorrichtung
- 22: Lenkvorrichtung
- 23: Laser
- 24: Laserlicht
- T: Tiefe
- B: Höhe
- M: Materialstärke
- D: Dicke
- RA: Rotationsachse

## Patentansprüche

1. Verfahren zur Herstellung eines Elastomerprodukts (1), insbesondere eines Fahrzeugluftreifens (2), aufweisend eine Festigkeitsträgerlage (2) mit Festigkeitsträgern (3),
• wobei an einer ersten Seite (4) der Festigkeitsträgerlage (2) anschließend an die Festigkeitsträger (3) eine Schicht (5) aufweisend elastomeres Material angeordnet ist,
• wobei die Schicht (5) eine von der Festigkeitsträgerlage (2) abgewandte Schichtoberfläche (6) aufweist, welche die Oberfläche des Elastomerprodukts (1) mitbildet, wobei die Schichtoberfläche (6) einen um eine Höhe B erhabenen Bereich (9) aufweist,
• wobei innerhalb des erhabenen Bereichs (9) ein Markierungsbereich (7) mit zumindest einer Vertiefung (8) einer Tiefe T angeordnet ist, wobei die Tiefe T die maximale Tiefe der Vertiefung (8) bezogen auf das an die Vertiefung angrenzende Oberflächenniveau des erhabenen Bereichs (9) ist, und
• wobei die Tiefe T der zumindest einen Vertiefung (8) größer, bevorzugt um 0,2 mm bis 0,6 mm größer, besonders bevorzugt um 0,2 mm bis 0,4 mm größer, ist als die Höhe B des erhabenen Bereichs (9),
wobei das Verfahren die folgenden Schritte aufweist:
a) Herstellen eines vulkanisierten Vorprodukts aufweisend die Festigkeitsträgerlage (2) und die Schicht (5) mit dem um die Höhe B erhabenen Bereich (9), wobei der erhabene Bereich (9) mit einer Orientierungsmarke (14, 18) versehen wird und
b) Materialabtrag, bevorzugt Materialabtrag mittels Lasergravur durch Bestrahlung der Schichtoberfläche (6) mit Laserlicht (24), im Bereich des Markierungsbereichs (7) innerhalb des erhabenen Bereichs (9) zur Erzeugung der zumindest einen Vertiefung (8) der Tiefe T, wobei die Tiefe T größer, bevorzugt um 0,2 mm bis 0,6 mm größer, besonders bevorzugt um 0,2 mm bis 0,4 mm größer, ist als die Höhe B des erhabenen Bereichs (9),
und
• wobei zwischen Schritt a) und Schritt b)
i. in einem Schritt c) die Orientierungsmarke (14, 18) mittels des optischen Systems (13) vermessen wird und
ii. mittels einer Positioniervorrichtung (21) eine räumliche Position einer Lenkvorrichtung (22) zur Lenkung eines zum Materialabtrag geeigneten Mittels (23) relativ zur Position und/oder Ausrichtung der Orientierungsmarke (13, 18) bestimmt wird und
iii. eine Positionierung des Elastomerprodukts (1) in Abhängigkeit von dieser Bestimmung vorgenommen wird
• und/oder wobei zwischen Schritt a) und Schritt b)
i. in einem Schritt d) die Orientierungsmarke (14, 18) mittels des optischen Systems (13) vermessen wird und
ii. mittels einer Positioniervorrichtung (21) eine räumliche Position einer Lenkvorrichtung (22) zur Lenkung eines zum Materialabtrag geeigneten Mittels (23) relativ zur Position und/oder Ausrichtung der Orientierungsmarke (13, 18) bestimmt wird und dann
bei Schritt b) die Lenkung der Lenkvorrichtung (22) in Abhängigkeit von dieser Bestimmung vorgenommen wird.

2. Verfahren nach Anspruch 1, **dadurch gekennzeichnet, dass** die Materialstärke M zwischen den Festigkeitsträgern (3) und einem Grund der zumindest einen Vertiefung (8) mindestens 1,0 mm, bevorzugt von 1,2 mm bis 3,5 mm, besonders bevorzugt von 2,1 mm bis 2,5 mm, beträgt.

3. Verfahren nach einem oder mehreren der vorhergehenden Ansprüche, **dadurch gekennzeichnet, dass** die Höhe B des erhabenen Bereichs (9) 0,05 mm bis 1,2 mm, bevorzugt 0,1 mm bis 1,0 mm, besonders bevorzugt 0,3 mm bis 0,5 mm, beträgt.

4. Verfahren nach einem oder mehreren der vorhergehenden Ansprüche, **dadurch gekennzeichnet, dass** die zumindest eine Vertiefung (8) eine Tiefe T von 0,2 mm bis 1,0 mm, bevorzugt von 0,4 mm bis 0,7 mm, besonders bevorzugt von in etwa 0,6 mm, aufweist.

5. Verfahren nach einem oder mehreren der vorhergehenden Ansprüche, **dadurch gekennzeichnet, dass** die Schicht (5) eine Dicke D von maximal 4,0 mm, bevorzugt von 2,1 mm bis 3,5 mm, besonders bevorzugt von 2,5 mm bis 3,0 mm, aufweist.

6. Verfahren nach einem oder mehreren der vorhergehenden Ansprüche, **dadurch gekennzeichnet, dass** bei einer Dicke D von 2,5 mm bis 3,0 mm die Tiefe T 0,4 mm bis 0,7 mm, die Höhe B 0,3 mm bis 0,5 mm und die Differenz T-B 0,2 mm bis 0,4 mm beträgt.

7. Verfahren nach einem oder mehreren der vorhergehenden Ansprüche, **dadurch gekennzeichnet, dass** innerhalb des Markierungsbereichs (7) eine Markierung angeordnet ist, welche die zumindest eine Vertiefung (8) der Tiefe T umfasst und dass die Markierung ganz oder teilweise eine Abbildung, ein Schriftzeichen, eine Schrift, einen Firmennamen, ein Firmenlogo, eine Kennzeichnungen oder einen digitalen Code, bevorzugt einen eindimensionalen Code oder einen zweidimensionalen Code, darstellt.

8. Verfahren nach einem oder mehreren der vorhergehenden Ansprüche, **dadurch gekennzeichnet, dass** der erhabene Bereich (9) eine Fläche von maximal 1600 mm², bevorzugt von 100 mm² bis 800 mm², besonders bevorzugt von 200 mm² bis 400 mm², auf der Oberfläche des Elastomerprodukts (1) einnimmt.

9. Verfahren nach einem oder mehreren der vorhergehenden Ansprüche, **dadurch gekennzeichnet, dass** die Orientierungsmarke (14, 18) derart angeordnet ist, dass sie mittels eines optischen Systems (13) optisch vermessbar ist.

10. Verfahren nach einem oder mehreren der vorhergehenden Ansprüche, **dadurch gekennzeichnet, dass** es sich bei dem Elastomerprodukt (1) um einen Fahrzeugluftreifen (2) aufweisend eine Karkasslage als Festigkeitsträgerlage (2) oder um ein Transportband oder um ein Förderband oder um eine Luftfeder, bevorzugt um einen Fahrzeugluftreifen (2) aufweisend eine Karkasslage, handelt.

11. Verfahren nach einem oder mehreren der vorhergehenden Ansprüche, **dadurch gekennzeichnet, dass** der erhabene Bereich bei Schritt a) formgebend zusammen mit der Schicht (5) vulkanisiert wird oder nach Vulkanisation der Schicht (5) auf die Schicht (5) aufgebracht wird.

## Claims

1. Process for producing an elastomer product (1), in particular a pneumatic vehicle tire (2), comprising a strength member ply (2) having strength members (3),
- wherein arranged on a first side (4) of the strength member ply (2) adjoining the strength members (3) is a layer (5) comprising elastomeric material,
- wherein the layer (5) has a layer surface (6) facing away from the strength member ply (2) which co-forms the surface of the elastomer product (1), wherein the layer surface (6) comprises a region (9) elevated by a height B,
- wherein arranged inside the elevated region (9) is a marking region (7) having at least one depression (8) of depth T, wherein the depth T is the maximum depth of the depression (8) based on the surface level of the elevated region (9) adjacent to the depression, and
- wherein the depth T of the at least one depression (8) is greater, preferably 0.2 mm to 0.6 mm greater, particularly preferably 0.2 mm to 0.4 mm greater than the height B of the elevated region (9),
wherein the process comprises the steps of:
a) producing a vulcanized precursor product comprising the strength member ply (2) and the layer (5) having the region (9) elevated by the height B, wherein the elevated region (9) is provided with an orientation mark (14, 18) and
b) material removal, preferably material removal by means of laser engraving by irradiation of the layer surface (6) with laser light (24) in the region of the marking region (7) inside the elevated region (9) to produce the at least one depression (8) of depth T, wherein the depth T is greater, preferably 0.2 mm to 0.6 mm greater, particularly preferably 0.2 mm to 0.4 mm greater than the height B of the elevated region (9), and
- wherein between step a) and step b)
i. in a step c) the orientation mark (14, 18) is measured by means of the optical system (13) and
ii. by means of a positioning apparatus (21) a spatial position of a steering apparatus (22) for steering a means suitable for material removal (23) relative to the position and/or alignment of the orientation mark (13, 18) is determined and
iii. a positioning of the elastomer product (1) is undertaken according to this determination
- and/or wherein between step a) and step b)
i. in a step d) the orientation mark (14, 18) is measured by means of the optical system (13) and
ii. by means of a positioning apparatus (21) a spatial position of a steering apparatus (22) for steering a means suitable for material removal (23) relative to the position and/or alignment of the orientation mark (13, 18) is determined and then
in step b) the steering of the steering apparatus (22) is undertaken according to this determination.

2. Process according to Claim 1, **characterized in that** the material thickness M between the strength members (3) and a bottom of the at least one depression (8) is at least 1.0 mm, preferably from 1.2 mm to 3.5 m, particularly preferably from 2.1 mm to 2.5 mm.

3. Process according to one or more of the preceding claims, **characterized in that** the height B of the elevated region (9) is 0.05 mm to 1.2 mm, preferably 0.1 mm to 1.0 mm, particularly preferably 0.3 mm to 0.5 mm.

4. Process according to one or more of the preceding claims, **characterized in that** the at least one depression (8) has a depth T of 0.2 mm to 1.0 mm, preferably of 0.4 mm to 0.7 mm, particularly preferably of about 0.6 mm.

5. Process according to one or more of the preceding claims, **characterized in that** the layer (5) has a thickness D of not more than 4.0 mm, preferably of 2.1 mm to 3.5 mm, particularly preferably of 2.5 mm to 3.0 mm.

6. Process according to one or more of the preceding claims, **characterized in that** at a thickness D of 2.5 mm to 3.0 mm the depth T is 0.4 mm to 0.7 mm, the height B is 0.3 mm to 0.5 mm and the difference T-B is 0.2 mm to 0.4 mm.

7. Process according to one or more of the preceding claims, **characterized in that** arranged inside the marking region (7) is a marking which comprises the at least one depression (8) of depth T and **in that** the marking completely or partially represents an image, a character, a script, a company name, a company logo, labelling or a digital code, preferably a one-dimensional code or a two-dimensional code.

8. Process according to one or more of the preceding claims, **characterized in that** the elevated region (9) occupies an area of not more than 1600 mm², preferably of 100 mm² to 800 mm², particularly preferably of 200 mm² to 400 mm² on the surface of the elastomer product (1).

9. Process according to one or more of the preceding claims, **characterized in that** the orientation mark (14, 18) is arranged such that it is optically measurable by means of an optical system (13).

10. Process according to one or more of the preceding claims, **characterized in that** the elastomer product (1) is a pneumatic vehicle tire (2) comprising a carcass ply as the strength member ply (2) or a transport belt or a conveyor belt or an air spring, preferably a pneumatic vehicle tire (2) comprising a carcass ply.

11. Process according to one or more of the preceding claims, **characterized in that** in step a) the elevated region is vulcanized together with the layer (5) in a shaping operation or is applied to the layer (5) after the vulcanization of the layer (5).

## Revendications

1. Procédé de fabrication d'un produit élastomère (1), notamment d'un pneu de véhicule (2), comprenant une couche de renfort (2) avec des renforts (3),
- dans lequel, sur un premier côté (4) de la couche de renfort (2), une couche (5) comprenant un matériau élastomère est agencée à côté des renforts (3),
- dans lequel la couche (5) présente une surface de couche (6) détournée de la couche de renfort (2), qui forme la surface du produit élastomère (1), la surface de couche (6) comprenant une zone (9) en relief d'une hauteur B,
- dans lequel une zone de marquage (7) comprenant au moins un creux (8) d'une profondeur T est agencée à l'intérieur de la zone en relief (9), la profondeur T étant la profondeur maximale du creux (8) par rapport au niveau de surface adjacent au creux de la zone en relief (9), et
- dans lequel la profondeur T dudit au moins un creux (8) est supérieure, de préférence supérieure de 0,2 mm à 0,6 mm, de manière particulièrement préférée supérieure de 0,2 mm à 0,4 mm, à la hauteur B de la zone en relief (9),
dans lequel le procédé comprend les étapes suivantes :
a) la fabrication d'un produit préliminaire vulcanisé comprenant la couche de renfort (2) et la couche (5) avec la zone en relief (9) de la hauteur B, la zone en relief (9) étant munie d'une marque d'orientation (14, 18), et
b) l'ablation de matériau, de préférence l'ablation de matériau par gravure laser par exposition de la surface de couche (6) à une lumière laser (24), dans la zone de la zone de marquage (7) à l'intérieur de la zone en relief (9) pour la formation dudit au moins un creux (8) de la profondeur T, la profondeur T étant supérieure, de préférence supérieure de 0,2 mm à 0,6 mm, de manière particulièrement préférée supérieure de 0,2 mm à 0,4 mm, à la hauteur B de la zone en relief (9),
et
- dans lequel, entre l'étape a) et l'étape b),
i. dans une étape c), la marque d'orientation (14, 18) est mesurée au moyen du système optique (13), et
ii. au moyen d'un dispositif de positionnement (21), une position spatiale d'un dispositif de direction (22) pour la direction d'un moyen (23) approprié pour l'ablation de matériau par rapport à la position et/ou l'alignement de la marque d'orientation (13, 18) est déterminée, et
iii. un positionnement du produit élastomère (1) est réalisé en fonction de cette détermination,
- et/ou dans lequel, entre l'étape a) et l'étape b),
i. dans une étape d), la marque d'orientation (14, 18) est mesurée au moyen du système optique (13), et
ii. au moyen d'un dispositif de positionnement (21), une position spatiale d'un dispositif de direction (22) pour la direction d'un moyen (23) approprié pour l'ablation de matériau par rapport à la position et/ou l'alignement de la marque d'orientation (13, 18) est déterminée, puis
lors de l'étape b), la direction du dispositif de direction (22) est réalisée en fonction de cette détermination.

2. Procédé selon la revendication 1, **caractérisé en ce que** l'épaisseur de matériau M entre les renforts (3) et un fond dudit au moins un creux (8) est d'au moins 1,0 mm, de préférence de 1,2 mm à 3,5 mm, de manière particulièrement préférée de 2,1 mm à 2,5 mm.

3. Procédé selon une ou plusieurs des revendications précédentes, **caractérisé en ce que** la hauteur B de la zone en relief (9) est de 0,05 mm à 1,2 mm, de préférence de 0,1 mm à 1,0 mm, de manière particulièrement préférée de 0,3 mm à 0,5 mm.

4. Procédé selon une ou plusieurs des revendications précédentes, **caractérisé en ce que** ledit au moins un creux (8) présente une profondeur T de 0,2 mm à 1,0 mm, de préférence de 0,4 mm à 0,7 mm, de manière particulièrement préférée d'environ 0,6 mm.

5. Procédé selon une ou plusieurs des revendications précédentes, **caractérisé en ce que** la couche (5) présente une épaisseur D d'au plus 4,0 mm, de préférence de 2,1 mm à 3,5 mm, de manière particulièrement préférée de 2,5 mm à 3,0 mm.

6. Procédé selon une ou plusieurs des revendications précédentes, **caractérisé en ce qu'**à une épaisseur D de 2,5 mm à 3,0 mm, la profondeur T est de 0,4 mm à 0,7 mm, la hauteur B est de 0,3 mm à 0,5 mm, et la différence T - B est de 0,2 mm à 0,4 mm.

7. Procédé selon une ou plusieurs des revendications précédentes, **caractérisé en ce qu'**un marquage est agencé à l'intérieur de la zone de marquage (7), qui comprend ledit au moins un creux (8) de la profondeur T, et **en ce que** le marquage représente en totalité ou en partie une image, une inscription, un caractère, un nom de société, un logo de société, un identifiant ou un code numérique, de préférence un code monodimensionnel ou un code bidimensionnel.

8. Procédé selon une ou plusieurs des revendications précédentes, **caractérisé en ce que** la zone en relief (9) occupe une surface d'au plus 1 600 mm², de préférence de 100 mm² à 800 mm², de manière particulièrement préférée de 200 mm² à 400 mm², sur la surface du produit élastomère (1).

9. Procédé selon une ou plusieurs des revendications précédentes, **caractérisé en ce que** la marque d'orientation (14, 18) est agencée de telle sorte qu'elle puisse être mesurée optiquement au moyen d'un système optique (13).

10. Procédé selon une ou plusieurs des revendications précédentes, **caractérisé en ce que** le produit élastomère (1) consiste en un pneu de véhicule (2) comprenant une couche de carcasse en tant que couche de renfort (2) ou en une bande de transport ou en une bande convoyeuse ou en un ressort pneumatique, de préférence en un pneu de véhicule (2) comprenant une couche de carcasse.

11. Procédé selon une ou plusieurs des revendications précédentes, **caractérisé en ce que** la zone en relief est vulcanisée conjointement avec la couche (5) lors de l'étape a) avec façonnage ou est appliquée sur la couche (5) après la vulcanisation de la couche (5).
